# EUROPÄISCHE PATENTSCHRIFT

(11) **EP 2 168 429 B1**
(45) Veröffentlichungstag und Bekanntmachung des Hinweises auf die Patenterteilung: **19.01.2011**
(21) Anmeldenummer: 08105437.1
(22) Anmeldetag: 25.09.2008
(51) Int. Cl.: A01J 25/00, A23C 19/064, A23C 19/068, A23C 19/08

(54) **Verfahren zum Herstellen von Mozzarella**
Method for producing Mozzarella
Méthode de production de Mozzarella

(43) Veröffentlichungstag der Anmeldung: 31.03.2010
(73) Patentinhaber: Bühler AG, 9240 Uzwil (CH)
(72) Erfinder: Meyer, Markus, 9322, Egnach (CH); Hofacker, Dieter, 8274, Tägerwilen (CH); Henning, Marco, 38518, Gifhorn (DE)
(74) Vertreter: Wilming, Martin

(56) Entgegenhaltungen:
- EP-A- 1 520 481
- DE-T2-602004 001 207
- DE-T3- 69 116 148
- FR-A- 2 794 936
- US-A- 4 066 800
- US-A- 4 339 468
- US-A- 5 925 398
- US-A1- 2003 003 194

## Beschreibung

Die Erfindung betrifft ein Verfahren zum Herstellen von fermentierten Milchprodukte, insbesondere Mozzarella.

Bei der Herstellung von Mozzarella wird üblicherweise ein als Cagliata bezeichnete, käseartiges Vorprodukt, das im wesentlichen aus Elweiss, Fett, Wasser und Salzen (Asche) besteht, in einem ersten Verfahrensschritt aufgeschmolzen und geknetet. Das so vorbehandelte Produkt wird gesalzen und anschliessend geformt; anschliessend wird es in einer wässrigen Lösung gelagert.

In dem ersten Verfahrensschritt entstehen grössere Mengen Schmelzwasser, das in der Praxis nicht weiterverwendet wird. Oftmals wird von Schaum- und Krustenbildung berichtet, was die Produkteigenschaften beeinträchtigen kann. Bei der Salzung besteht die Gefahr, dass sich inhomogenitäten wie bspw. Salznester bilden.

Im Stand der Technik (bspw. US 4,669,254 und US 5,925,398) sind aufwändige Verfahren beschrieben, die zwar zufrieden stellende Ergebnisse liefern, maschinell jedoch sehr aufwändig sind. Insbesondere erfordern die beschriebenen Verfahren eine Behandlung des Produkts mit einer Salzlösung vor dem abschliessenden Formgebungsprozess.

Das Dokument FR 2 794 936 beschreibt ein Verfahren zur Herstellung von Weichkäsen, bei welchem eine Salzlösung in den Extruder zugeführt wird.

Das Dokument DE 691 16 148 T2 beschreibt ein Verfahren zur Herstellung von Mozzarella, bei welchem Extrusion zur Formgelung eingesetzt wird und die Salzung vor und nach der Extrusion erfolgt.

Es ist daher eine Aufgabe der Erfindung, die Nachteile des Stands der Technik zu vermeiden, Insbesondere also vergleichbare Produkteigenschaften mit geringerem maschinellen und zeitlichen Aufwand zu erreichen.

Diese Aufgabe wird gelöst durch ein Verfahren zum Herstellen von Mozzarella, gelöst, umfassend die Schritte:
➢ Beschicken eines Extruders mit Cagliata;
➢ Fördern des Vorprodukts entlang des sich innerhalb des Extruders erstreckenden Förderwegs zwischen der Beschickungsöffnung und der formgebenden Austrittsöffnung des Extruders;
➢ Zusetzen von Salz, insbesondere Kochsalz, zu dem Vorprodukt während des Extrusionsprozesses;
wobei ein Extruder eingesetzt wird, welcher ein L/d Verhältnis von ≥ 12, vorzugsweise im Bereich von 20 bis 48, besonders bevorzugt im Bereich von 28 bis 40 aufweist.

Unter dem L/d Verhältnis wird im Rahmen der Erfindung das Verhältnis der Gesamtlänge des Prozessteils des Extruders zum äusseren Durchmesser der Extruderschnecken verstanden, mit:
L: Gesamtlänge des Prozessteils des Extruders. Der Prozessteil beginnt dort, wo das Vorprodukt in den Extruder zugegeben wird und endet dort, wo das im Extruder verarbeitete Produkt (inklusive der Zusatzstoffe) den Extruder verlässt. Das Verlassen des Extruders geschieht an dem Ort, wo das Produkt in den Düsenbereich eintritt. Die Länge L ist in der Praxis nahezu gleich der Länge der Extruderschnecke.
d: Äusserer Durchmesser einer Extruderschnecke.

Völlig überraschend kann durch dieses Verfahren auf jegliche ansonsten übliche Plastifiziervorrichtungen und/oder Mischkessel verzichtet werden; dennoch können mit dem erfindungsgemässen Verfahren homogene, insbesondere texturierte Endprodukte erhalten werden. Der Extruder kann so betrieben werden, dass eine solche Scher- und Mischwirkung erzielt wird, die geeignet ist, die Homogenisierung und insbesondere Texturierung der Produkte zu bewirken. Ebenfalls kann auch das Salz in den Extruder eingespeist werden, in Abkehr von den bislang üblichen Verfahren.

In besonders bevorzugten Ausführungsformen wird das Salz in den Förderweg des Extruders zugesetzt; alternativ - derzeit jedoch nicht bevorzugt - könnte das Salz auch in die Beschickungsöffnung des Extruders eingegeben werden.

Weiter vorzugsweise wird das Salz in der der Beschickungsöffnung zugewandten Hälfte des Förderwegs des Extruders zugesetzt. Hierdurch ist gewährleistet, dass für die homogene Einarbeitung des Salzes in das Produkt noch genügend Förderweg durch den Extruder verbleibt.

Das Salz wird vorzugsweise in Form einer Kochsalzlösung zugesetzt; alternativ - derzeit jedoch nicht bevorzugt - könnte das Salz auch in fester Form zugegeben werden.

Besonders bevorzugt wird das Salz, insbesondere die Kochsalzlösung, dem Vorprodukt durch mindestens eine Zuführöffnung zugesetzt, die in der der Beschickungsöffnung zugewandten Hälfte des Extruders angeordnet ist. Selbstverständlich können dem Vorprodukt auf dem Förderweg noch weitere Stoffe, insbesondere Wasser, zugesetzt wird.

Die Zuführöffnung hat vorzugsweise einen Öffnungsdurchmesser von ≤ 100 mm. Für die Zuführung einer Salzlösung wird vorzugsweise ein Öffnungsdurchmesser im Bereich von 1 mm bis 20 mm verwendet, besonders bevorzugt im Bereich von 2 mm bis 10mm.

Als besonders bevorzugte Verfahrens- und Extruderparameter haben sich, insbesondere in der Herstellung von Mozzarella, erwiesen:
➢ das Extruderwerkzeug weist mindestens eine sich über eine Länge von mindestens 50%, vorzugsweise mindestens 80%, besonders bevorzugt 90% oder mehr der Länge des Förderwegs erstreckende Extruderschnecke auf;
➢ das Vorprodukt wird entlang des Förderwegs des Extruders auf eine Temperatur von mehr als 50°C, insbesondere mehr als 60°C, besonders bevorzugt etwa 67°C; und/oder um mindestens 10°C, insbesondere um mehr als 20°C erwärmt.

Die Erwärmung muss hierbei nur kurzzeitig (wenige Sekunden) erfolgen.

Besonders bevorzugt erfolgt durch den Extruder ein Eintrag von spezifischer mechanischer Energie in das Vorprodukt von mindestens 10 Wh/kg, vorzugsweise mindestens 20 Wh/kg. Ein solcher Energieeintrag kann insbesondere dadurch erzielt werden, dass der Extruder mit einer Drehzahl von
➢ ≥ 600 U/min, vorzugsweise ≥ 650 U/min, besonders bevorzugt ≥ 700 U/min betrieben wird; und/oder
➢ 1200 U/min, vorzugsweise ≤ 1000 U/min
betrieben wird.

Der Extruder, insbesondere der Förderweg des Extruders, wird typischerweise auf eine Temperatur von ≥ 60°C, vorzugsweise ≥ 70°C, besonders bevorzugt von ≥ 75°C erwärmt; jedoch lediglich auf eine Temperatur von ≤ 100°C, vorzugsweise ≤ 90°C, besonders bevorzugt ≤ 80°C.

An der formgebenden Austrittsöffnung des Extruders kann eine rohrförmige, vorzugsweise doppelwandige Extrusionsdüse angeordnet werden, durch welche das Milchprodukt extrudiert wird. Eine solche doppelwandige Düse kann mit einfachen Mitteln temperierbar, insbesondere beheiz- oder kühlbar ausgestaltet sein.

Qualität und Herstellungskosten des extrudierten Produkts werden insbesondere durch den Salzgehalt und den Wassergehalt bestimmt. Ein Wassergehalt von 50 Gew.% wird in der Regel als optimal erachtet. Das Zusetzen von Salz und/oder Wasser zu dem Vorprodukt wird daher besonders bevorzugt während des Extrusionsprozesses gesteuert oder geregelt; dies kann insbesondere in Abhängigkeit von einer Eigenschaft des extrudierten Produkts und/oder des Vorprodukts erfolgen.

Extrusionsanlagen, bei welchen der Zusatz von Additiven während dem Extrusions prozess gesteuert oder geregelt wird in Abhängigkeit von Sensorsignalen betreffend Aspekte der Zusammensetzung eines Vorprodukts oder des Extrudates sind als solche seit langem bekannt.

Im Rahmen der Erfindung erstmalig vorgeschlagen wird hingegen die Verwendung eines solchen Extruders
➢ mit mindestens einer Zuführöffnung für Zusatzstoffe, insbesondere Salz oder eine Salzlösung, in den Förderweg des Extruders;
➢ wenigstens einer Sensoranordnung zum Bestimmen einer Eigenschaft des extrudierten Produkts und/oder des Vorprodukts;
➢ einem L/d Verhältnis von ≥ 12, vorzugsweise im Bereich von 20 bis 48, besonders bevorzugt im Bereich von 28 bis 40; sowie
➢ einer Steuer- oder Regeleinrichtung, die derart ausgebildet ist, dass das Zuführen eines Zusatzstoffs durch die Zuführöffnung in den Förderweg des Extruders in Abhängigkeit von mindestens einem Signal der Sensoranordnung erfolgen kann;
in der Herstellung von Mozzarella.

Als besonders bevorzugt hat sich im Rahmen der Erfindung (einzeln oder in Kombination) herausgestellt:
➢ Die Verwendung eines Zweiwellenextruders; hierdurch gelingt ein hervorragender Kompromiss aus Mischeffizienz, möglicher Wärmeübertragung auf das Produkt und dem Eintrag von mechanischer Energie, insbesondere bei niedrig viskosen Produkten.
> Die Verwendung von gleichsinnig drehenden Schnecken; hierdurch gelingt die Mischung und Texturierung besser.
➢ Die Verwendung von Schnecken mit Erdmenger-Profil (erstmals beschrieben in: R. Erdmenger, Misch- und Knetvorrichtungen, Patentschrift DE 813154; R. Erdmenger, Vorrichtung zum Verkneten, Gelatinieren und Pressen von plastischen Massen, Patentschrift DE 862668).
➢ Die Verwendung von Schnecken mit einer Gangzahl ≥ 1, insbesondere über einen Anteil von ≥ 50% der Prozesslänge des Extruders, vorzugsweise von 60% bis 100%, besonders bevorzugt von 80% bis 100%.

Die Erfindung wird nachfolgend anhand von Ausführungsbeispielen näher erläutert, ohne dass der Gegenstand der Erfindung hierauf zu beschränken wäre.

Es zeigen:
- Fig. 1:: Schematischer Aufbau der Versuchsanlage;
- Fig. 2:: Eintrag von spezifischer mechanischer Energie in Abhängigkeit von der ver- wendeten Extruderschnecke.

Es wurden Extrusionsversuche gefahren um zu zeigen, dass eine Aufschmelzung und Texturierung des Vorprodukts grundsätzlich möglich ist. Der Versuch zeigt die Ersetzbarkeit des sogenannten "Filata Schritts" bei der Mozzarella Herstellung. Als Vorprodukt wurde Cagliata verwendet.

Es wurde gefunden, dass sich der Cagliata mittels Extrusionstechnologie sehr gut texturieren lässt.

Der Käsebruch (Cagliata) wurde geschnetzelt bereitgestellt und hatte einen akzeptablen pH-Wert von 5.3.

Für die Herstellung des Salzwassers wurde handelsübliches Kochsalz verwendet und mit Wasser gemischt in einem Gewichtsverhältnis von 4:1. Die Salzwasser Dosierung wurde variiert, je nach Wassergehalt des Käses.

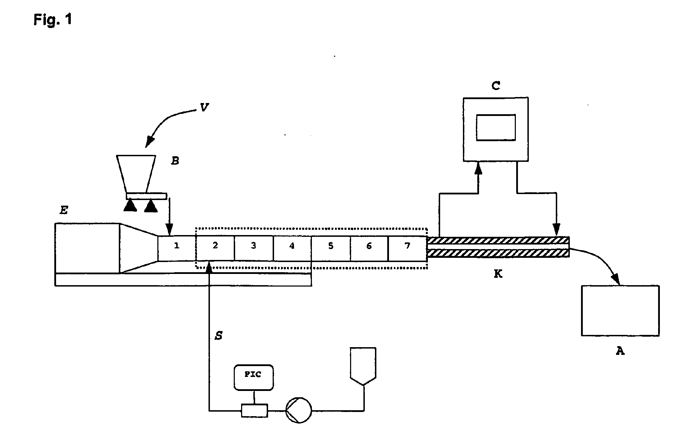

Der Versuchsaufbau (Fig. 1) bestand prinzipiell aus dem Extruder E (mit verschiedenen Segmenten; nummeriert von 1 bis 7 in Fig. 1), Beschickungsöffnung B, Kühldüse K mit einem Chiller C (Kühlgerät) und Salzwasserzudosierung S. Die Beschickungsöffnung wurde mit einer Presskuchendosierung ausgerüstet, die kalibriert wurde; bei 13Hz ergab sich ein Durchsatz von 74 kg/h. Der Extruder bestand aus sieben Gehäusen, wobei der Käse in das erste Gehäuse gefördert wurde und das Salzwasser in das zweite Gehäuse eingespeist wurde. Die Kühldüse wurde nur zeitweise verwendet und ist für die vorliegende Erfindung nicht wesentlich; sie kann durch eine gewöhnliche Runddüse (bspw. mit einem Durchmesser von 14.5 und 19 Millimeter) ersetzt werden. Auch eine Flachdüse kann verwendet werden, bspw. mit Querschnitten von 10 x 50 Millimeter oder 10 x 40 verwendet. Das Extrudat wurde in einer Auffangwanne A gesammelt. Tabelle 1 zeigt die Extruder-Fahrdaten, mit welchen ein optimales Produkt erzielt wurde.

**Tabelle 1:**

| **Versuch** | **#01** | |
|---|---|---|
| L/D | 28 | |
| Schneckendrehzahl [rpm] | 303 | |
| Drehmoment [%] | 3 | |
| Motorleistung [kW] | 0.7 | |
| SME [Wh/kg] | 165 | |
| Cagliata [kg/h] | 74 | 94.3% |
| Wasser [kg/h] | 3.6 | 4.6% |
| Salz [kg/h] | 0.9 | 1.1% |
| TOTAL [kg/h] | 78.5 | |
| Gehäuse 1 [°C] | 34 | |
| Gehäuse 2 [°C] | 40 | |
| Gehäuse 3 [°C] | 71 | |
| Gehäuse 4 [°C] | 78 | |
| Gehäuse 5 [°C] | 80 | |
| Gehäuse 6 [°C] | 81 | |
| Gehäuse 7 [°C] | 81 | |
| T_Endplatte [°C] | 64 | |
| p_Endplatte [bar] | 1 bar | |
| Geometrie Vordüse | H10 x B50 mm | |
| Anzahl Kühlmodule | 1 | |
| Temperatur_Kühlmittel Vorlauf | 10°C | |

Zusätzlich wurden in einigen Versuchen noch Paprikapulver, Kräuter und Farbstoff in den Cagliata gemischt, um die Auswirkungen zu sehen. Das Paprika pulver war gar nicht sichtbar am Austritt des Extruders und geschmacklich nur leicht zu erkennen, währendem die Kräuter und der Farbstoff visuell klar zu erkennen waren. Kräuter und Farbstoff wurden dem Presskuchendosierer beigegeben.

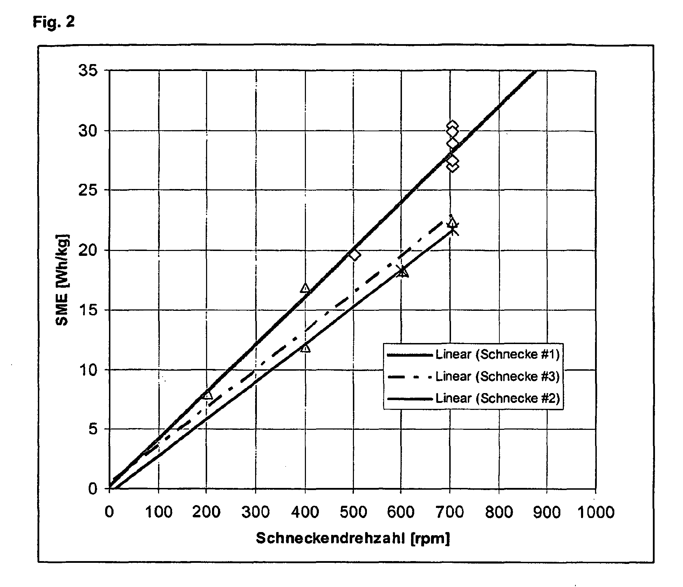

Verschiedene Schnecken wurden im Extruder getestet. Es hat sich gezeigt, dass auch mit einer sehr starken Schnecke nicht mehr spezifische mechanisch Energie (SME) in das Produkt eingeleitet werden kann. Das niedrig viskose Material behindert den Eintrag von Reibungswärme (Fig. 2; Stärken der Schnecken: #3 > #2 > #1). Zum Erreichen einer guten Textur des Mozzarellas sind 650 - 700 rpm Schneckendrehzahl oder mehr bevorzugt. Erstaunlicherweise zeigt die Schnecke #1 - welche bei konventionellen Extrusionsprozessen als konstruktiv schwache Schnecke gilt - die höchsten SME Werte (vergl. Fig. 2).

Vorzugsweise werden die Gehäuse 3, 4 und 5 (Fig. 1) auf 80°C temperiert, um die notwendige Texturierungstemperatur von ca. 67°C zu erreichen.

Der extrudierte Käse zeigte die gewünschte Texturierung, und keine Verbrennungen waren ersichtlich. Ebenfalls konnten keine Salznester festgestellt werden und das Extrudat war homogen.

## Patentansprüche

1. Verfahren zum Herstellen von Mozzarella, umfassend die Schritte:
➢ Beschicken eines Extruders mit Cagliata;
➢ Fördern des Cagliata entlang des sich innerhalb des Extruders erstreckenden Förderwegs zwischen der Beschickungsöffnung und der formgebenden Austrittsöffnung des Extruders;
➢ Zusetzen von Salz, insbesondere Kochsalz, zu dem Cagliata während des
Extrusionsprozesses:
wobei ein Extruder eingesetzt wird, welcher ein Ud Verhältnis von ≥ 12, vorzugsweise im Bereich von 20 bis 48, besonders bevorzugt im Bereich von 28 bis 40 aufweist.

2. Verfahren gemäss Anspruch 1, **dadurch gekennzeichnet, dass** das Salz in den Förderweg des Extruders zugesetzt wird.

3. Verfahren gemäss einem der Ansprüche 1 oder 2 **dadurch gekennzeichnet, dass** das Salz In der der Beschickungsöffnung zugewandten Hälfte des Förderwegs zugesetzt wird.

4. Verfahren gemäss einem der Ansprüche 1 bis 3, **dadurch gekennzeichnet, dass** das Salz in Form einer Kochsalzlösung zugesetzt wird.

5. Verfahren gemäss einem der Ansprüche 1 bis 4, **dadurch gekennzeichnet, dass** das Salz, insbesondere die Kochsalzlösung, dem Cagliata durch mindestens eine Zuführöffnung zugesetzt wird, die In der der Beschickungsöffnung zugewandten Hälfte des Extruders angeordnet ist.

6. Verfahren gemäss einem der Ansprüche 1 bis 5, **dadurch gekennzeichnet, dass** das Extruderwerkzeug mindestens eine sich über eine Länge von mindestens 50%, vorzugsweise mindestens 80%, besonders bevorzugt 90% oder mehr der Länge des Förderwegs erstreckende Extruderschnecke aufweist.

7. Verfahren gemäss einem der Ansprüche 1 bis 6, **dadurch gekennzeichnet, dass** dem Cagliata auf dem Förderweg mindestens ein weiterer Stoff, insbesondere Wasser, zugesetzt wird.

8. Verfahren gemäss einem der Ansprüche 1 bis 7, **dadurch gekennzeichnet, dass** der Cagliata entlang des Förderwegs
➢ auf eine Temperatur von mehr als 50°C, insbesondere mehr als 60°C, besonders bevorzugt etwa 67°C; und/oder
➢ um mindestens 10°C, insbesondere um mehr als 20°C erwärmt wird.

9. Verfahren gemäss einem der Ansprüche 1 bis 8, **dadurch gekennzeichnet, dass** durch den Extruder ein Eintrag von spezifischer mechanischer Energie in den Cagliata
von mindestens 10 Wh/kg, vorzugsweise mindestens 20 Wh/kg erfolgt.

10. Verfahren gemäss einem der Ansprüche 1 bis 9, **dadurch gekennzeichnet, dass** der Extruder mit einer Drehzahl von
➢ ≥600 U/min, vorzugsweise ≥650 U/min, besonders bevorzugt ≥700 U/min betrieben wird; und/oder
➢ ≤1200 U/min, vorzugsweise ≤1000 U/min
betrieben wird.

11. Verfahren gemäss einem der Ansprüche 1 bis 10, **dadurch gekennzeichnet, dass** der Extruder, insbesondere der Förderweg des Extruders, auf eine Temperatur von ≥60°C, vorzugsweise ≥70°C, besonders bevorzugt von ≥75°C erwärmt wird:
jedoch lediglich auf eine Temperatur von ≤100°C, vorzugsweise ≤90°C, besonders bevorzugt ≤80°C.

12. Verfahren gemäss einem der Ansprüche 1 bis 11, **dadurch gekennzeichnet, dass** an der formgebenden Austrittsöffnung eine rohrförmige, vorzugsweise doppelwandige Extrusionsdüse angeordnet ist, durch welche der Mozzarella extrudiert wird.

13. Verfahren gemäss Anspruch 12, **dadurch gekennzeichnet, dass** die Extrusionsdüse temperiert, insbesondere beheizt oder gekühlt wird.

14. Verfahren gemäss einem der Ansprüche 1 bis 13, **dadurch gekennzeichnet, dass** das Zusetzen von Salz, insbesondere Kochsalz, zu dem Cagliata während des Extrusionsprozesses gesteuert oder geregelt wird; Insbesondere In Abhängigkeit von einer Eigenschaft des extrudierten Produkts und/oder des Cagliata.

15. Verwendung eines Extruders mit
≥ mindestens einer Zufuhröffnung für Zusatzstoffe, insbesondere Salz oder eine Salzlösung, in den Förderweg des Extruders;
➢ wenigstens einer Sensoranordnung zum Bestimmen einer Eigenschaft des extrudierten Produkts und/oder des Cagliata;
➢ einem Ud Verhältnis von ≥12, vorzugsweise im Bereich von 20 bis 48, besonders bevorzugt im Bereich von 28 bis 40; sowie
≥ einer Steuer- oder Regelelnrichtung, die derart ausgebildet ist, dass das Zuführen eines Zusatzstoffs durch die Zuführöffnung in den Förderweg des Extruders in Abhängigkeit von mindestens einem Signal.der Sensoranordnung erfolgen kann;
in der Herstellung von
Mozzarella.

## Claims

1. Process for producing Mozzarella, comprising the steps:
➢ charging an extruder with Cagliata;
➢ transporting the Cagliata along the transport path extending within the extruder between the charging orifice and the shaping exit orifice of the extruder;
➢ adding salt, in particular sodium chloride,
to the Cagliata during the extrusion process;
wherein an extruder is used which has an L/d ratio of ≥ 12, preferably in the range from 20 to 48, particularly preferably in the range from 28 to 40.

2. Process according to Claim 1, **characterized in that** the salt is added to the transport pathway of the extruder.

3. Process according to either of Claims 1 or 2, **characterized in that** the salt is added in the half of the transport pathway facing the charging orifice.

4. Process according to any one of Claims 1 to 3, **characterized in that** the salt is added in the form of a sodium chloride solution.

5. Process according to any one of Claims 1 to 4, **characterized in that** the salt, in particular the sodium chloride solution, is added to the Cagliata via at least one feed orifice which is arranged in the half of the extruder facing the charging orifice.

6. Process according to any one of Claims 1 to 5, **characterized in that** the extruder tool has at least one extruder screw extending over a length of at least 50%, preferably at least 80%, particularly preferably 90%, or more of the length of the transport pathway.

7. Process according to any one of Claims 1 to 6, **characterized in that** at least one further substance, in particular water, is added to the Cagliata on the transport pathway.

8. Process according to any one of Claims 1 to 7, **characterized in that** the Cagliata is heated along the transport pathway
➢ to a temperature of above 50°C, in particular above 60°C, particularly preferably about 67°C; and/or
➢ by at least 10°C, in particular by more than 20°C.

9. Process according to any one of Claims 1 to 8, **characterized in that** the extruder has an input of specific mechanical energy into the Cagliata of at least 10 Wh/kg, preferably at least 20 Wh/kg.

10. Process according to any one of Claims 1 to 9, **characterized in that** the extruder is operated at a speed of rotation of
➢ ≥ 600 rpm, preferably ≥ 650 rpm, particularly preferably ≥ 700 rpm; and/or
➢ 1200 rpm, preferably ≤ 1000 rpm.

11. Process according to any one of Claims 1 to 10, **characterized in that** the extruder, in particular the transport pathway of the extruder, is heated to a temperature of ≥ 60°C, preferably ≥ 70°C, particularly preferably ≥ 75°C; but only to a temperature of 100°C, preferably ≤ 90°C, particularly preferably 80°C.

12. Process according to any one of Claims 1 to 11, **characterized in that** a tubular, preferably double-walled extrusion die is arranged at the shaping exit orifice, through which extrusion die the Mozzarella is extruded.

13. Process according to Claim 12, **characterized in that** the extrusion die is brought to and maintained at a set temperature, in particular is heated or cooled.

14. Process according to any one of Claims 1 to 13, **characterized in that** the addition of salt, in particular sodium chloride, to the Cagliata during the extrusion process is under open-loop or closed-loop control; in particular depending on a property of the extruded product and/or of the Cagliata.

15. Use of an extruder having
➢ at least one feed orifice for additives, in particular salt or a salt solution, into the transport pathway of the extruder;
➢ at least one sensor arrangement for determining a property of the extruded product and/or the Cagliata;
➢ an L/d ratio of ≥ 12, preferably in the range from 20 to 48, particularly preferably in the range from 28 to 40; and also
➢ an open-loop or closed-loop control appliance which is constructed in such a manner that feeding an additive through the feed orifice into the transport pathway of the extruder can be performed in dependence on at least one signal of the sensor arrangement;
in the production of Mozzarella.

## Revendications

1. Procédé de préparation de mozzarella, comprenant les étapes :
- > approvisionnement d'une extrudeuse en caillé ;
- > transport du caillé le long du parcours de transport s'étendant à l'intérieur de l'extrudeuse entre l'ouverture d'approvisionnement et l'ouverture d'évacuation façonnante de l'extrudeuse ;
- > addition de sel, en particulier de chlorure de sodium, au caillé pendant le procédé d'extrusion ;
avec utilisation d'une extrudeuse qui présente un rapport L/d ≥ 12, de préférence dans la plage de 20 à 48, de manière particulièrement préférée dans la plage de 28 à 40.

2. Procédé selon la revendication 1, **caractérisé en ce que** le sel est ajouté dans le parcours de transport de l'extrudeuse.

3. Procédé selon l'une quelconque des revendications 1 ou 2, **caractérisé en ce que** le sel est ajouté dans la moitié du parcours de transport orientée vers l'ouverture d'approvisionnement.

4. Procédé selon l'une quelconque des revendications 1 à 3, **caractérisé en ce que** le sel est ajouté sous forme d'une solution de chlorure de sodium.

5. Procédé selon l'une quelconque des revendications 1 à 4, **caractérisé en ce que** le sel, en particulier la solution de chlorure de sodium, est ajouté au caillé via au moins une ouverture d'alimentation, qui est disposée dans la moitié de l'extrudeuse orientée vers l'ouverture d'approvisionnement.

6. Procédé selon l'une quelconque des revendications 1 à 5, **caractérisé en ce que** l'outil de l'extrudeuse présente au moins une vis d'extrudeuse s'étendant sur une longueur d'au moins 50%, de préférence d'au moins 80%, de manière particulièrement préférée de 90% ou plus de la longueur du parcours de transport.

7. Procédé selon l'une quelconque des revendications 1 à 6, **caractérisé en ce qu'**au moins une autre substance, en particulier de l'eau, est ajoutée au caillé le long du parcours de transport.

8. Procédé selon l'une quelconque des revendications 1 à 7, **caractérisé en ce que** le caillé est chauffé le long du parcours de transport
- > à une température de plus de 50°C, en particulier de plus de 60°C, de manière particulièrement préférée d'environ 67°C ; et/ou
- > d'au moins 10°C, en particulier de plus de 20°C.

9. Procédé selon l'une quelconque des revendications 1 à 8, **caractérisé en ce que** l'extrudeuse réalise une introduction d'énergie mécanique spécifique dans le caillé d'au moins 10 Wh/kg, de préférence d'au moins 20 Wh/kg.

10. Procédé selon l'une quelconque des revendications 1 à 9, **caractérisé en ce que** l'extrudeuse est exploitée à une vitesse de rotation
- > ≥ 600 t/min, de préférence ≥ 650 t/min, de manière particulièrement préférée ≥ 700 t/min ; et/ou
- > ≤ 1200 t/min, de préférence ≤ 1000 t/min.

11. Procédé selon l'une quelconque des revendications 1 à 10, **caractérisé en ce que** l'extrudeuse, en particulier le parcours de transport de l'extrudeuse, est chauffé à une température ≥ 60°C, de préférence ≥ 70°C, de manière particulièrement préférée ≥ 75°C ; cependant seulement à une température ≤ 100°C, de préférence ≤ 90°C, de manière particulièrement préférée ≤ 80°C.

12. Procédé selon l'une quelconque des revendications 1 à 11, **caractérisé en ce qu'**une filière d'extrudeuse tubulaire, de préférence à double paroi est disposée au niveau de l'ouverture d'évacuation façonnante, au travers de laquelle la mozzarella est extrudé.

13. Procédé selon la revendication 12, **caractérisé en ce que** la filière d'extrusion est thermostatisée, en particulier chauffée ou refroidie.

14. Procédé selon l'une quelconque des revendications 1 à 13, **caractérisé en ce que** l'addition de sel, en particulier de chlorure de sodium, au caillé pendant le procédé d'extrusion est contrôlée ou régulée ; en particulier en fonction d'une propriété du produit extrudé et/ou du caillé.

15. Utilisation d'une extrudeuse présentant
- > au moins une ouverture d'alimentation pour des additifs, en particulier du sel ou une solution de sel, dans le parcours de transport de l'extrudeuse ;
- > au moins un dispositif à sonde pour la détermination d'une propriété du produit extrudé et/ou du caillé ;
→ un rapport L/d ≥ 12, de préférence dans la plage de 20 à 48, de manière particulièrement préférée dans la plage de 28 à 40 ; et
→ un dispositif de contrôle ou de régulation qui est réalisé de manière telle que l'alimentation d'un additif peut avoir lieu via l'ouverture d'alimentation dans le parcours de transport de l'extrudeuse en fonction d'au moins un signal du dispositif à sonde ;
dans la préparation de mozzarella.
